# EUROPEAN PATENT APPLICATION

(11) **EP 0 875 349 A1**
(43) Date of publication of application: **04.11.1998**
(21) Application number: 96941857.3
(22) Date of filing: 12.12.1996
(51) Int. Cl.: B29B 11/12, B29B 7/52, B29C 43/48, C08J 3/20

(54) **METHOD OF PRODUCING POLYTETRAFLUOROETHYLENE SHEET, APPARATUS THEREFOR, AND APPARATUS FOR GRANULATING AND KNEADING**

(30) Priority: 15.12.1995 JP 327553/95
(71) Applicant: DAIKIN INDUSTRIES, LIMITED, Osaka-shi Osaka 530 (JP)
(72) Inventor: MURAKAMI, Shinji, Yodogawa-seisakusho, Settsu-shi, Osaka566 (JP); UCHIDA, Tatsuro, Yodogawa-seisakusho, Settsu-shi, Osaka 566 (JP); KAWACHI, Shoji, Yodogawa-seisakusho, Settsu-shi, Osaka 566 (JP)
(74) Representative: Flaccus, Rolf-Dieter, Dr.
(86) International application number: JP9603639
(87) International publication number: WO9722452

(57) **Abstract**

This invention provides a process and apparatus for forming PTFE sheets continuously and efficiently by compressing polytetrafluoroethylene (PTFE) powder provided with lubricity by a lubricant to be a sheet (110), and by sandwiching and rolling the sheet in the gap between a pair of strip-like belts that run while keeping their surfaces opposed to each other in which the gap at the exit side is narrower than at the entrance side (120). This invention also provides an apparatus for granulating and kneading PTFE powder provided with lubricity by a lubricant by pressing and rubbing between the surfaces of at least one pair of resin belts (4,7). For this purpose, the lubricant-containing PTFE powder is sandwiched in the gap formed between the opposed surfaces of the belts, the belts runs at the different speeds, at least one of the belts is vibrated in the transverse direction, and as a result, the powder to be granulated-kneaded is conveyed obliquely to the belts' running direction.

## Description

### TECHNICAL FIELD

This invention relates to a process and apparatus for producing a sheet of polytetrafluoroethylene material by continuous granulation and kneading. More specifically, this invention relates to a process and apparatus for forming a sheet by continuously granulating and kneading polytetrafluoroethylene powder, the sheet is suitable for fluororesin tapes used for seal tapes for water pipes, gas pipes and so on.

This invention also relates to an apparatus to continuously granulate and knead starting materials such as viscous materials or their precursors.

### BACKGROUND ART

In the conventional industrial process for forming a polytetrafluoroethylene (hereinafter PTFE) sheet, a material mixed with a lubricant such as naphtha is preformed into a cylindrical shape for an extruder. The paste-extruded material is rolled by using reduction rolls before the lubricant volatilizes, formed into a sheet shape, and the lubricant is removed from the sheet.

In the conventional process, however, a necessity of batch treatment such as preformation and paste-extrusion causes a disadvantage, namely, the steps cannot be carried out continuously. Another inconvenience in the production process is that the dies should be changed each time to modify the sheet width.

Furthermore, quite a few steps are required to obtain a final product from an aqueous dispersion by an emulsion polymerisation method. The steps include:
coagulating the PTFE aqueous dispersion to obtain PTFE wet powder;
drying the PTFE wet powder to obtain PTFE fine powder;
mixing a lubricant such as an organic solvent to obtain lubricant-containing PTFE powder;
preforming the lubricant-containing PTFE powder, putting the preformed PTFE into a cylinder of an extruder and pressing with a ram to obtain a paste-extruded PTFE molding; and
removing the lubricant by heating or extraction, and then sintering the molding. (Such a method is disclosed, for example, in Japanese Patent Publication Kokoku No. 61-54578, and Japanese Patent Publication Kokai No. 50-34661.)

Such lubricant-containing PTFE wet powder and lubricant-containing PTFE powder will be fibrillated and modified because of shear. It is the best for such powders to be hand-kneaded several times so that fibrillation will be controlled so as not to influence the subsequent steps. A conventional mixing machine such as a kneader cannot provide a uniform force to the materials, and therefore, a continuous operation is needed to unify the force to the whole material. Mixing and kneading should be done in a mixing machine such as a kneader. In such a machine, a member to impact mechanical shear moves and kneads inside its reservoir, and the remaining room is used for mixing.

In this process, however, the lubricant-containing PTFE wet powder or the lubricant-containing PTFE powder will be fibrillated before the powder is uniformly sheared by the mixing machine, and thus the subsequent operations will be disturbed. If the material is kneaded for a short time, fibrillation proceeds unevenly, and thus, a molding failure will occur. In addition, it is difficult in the conventional process to granulate and knead the lubricant-containing PTFE wet powder or the lubricant-containing PTFE powder efficiently and continuously.

In order to improve the above-mentioned conventional process for granulating and kneading, the inventors have disclosed an efficient and continuous process for granulating and kneading while dewatering the PTFE wet powder, using a filter cloth (International Publication WO 95/23178). However, some problems occur in this process, for instance, the PTFE wet powder is likely to slip on the filter cloth, or the filter cloth will be packed.

### DISCLOSURE OF THE INVENTION

In order to solve these and other problems of the conventional techniques, an object of this invention is to provide a process and an apparatus for forming PTFE sheets in a continuous and efficient manner.

A second object of this invention is to provide a process and an apparatus for forming PTFE sheets whose width can be easily modified without any special operations such as a dies change.

A third object of this invention is to provide a process and an apparatus for granulating and kneading PTFE powder efficiently and continuously, where the PTFE powder is provided with lubricity by a lubricant in order to be formed like a sheet.

A fourth object of this invention is to provide an apparatus for granulating and kneading materials such as viscous materials or their precursors in an efficient and continuous manner.

In order to achieve the above-mentioned objects, the process for producing PTFE sheets of this invention comprises a step where PTFE powder provided with lubricity by a lubricant is sandwiched between at least a pair of strip-like belts and rolled. The belts run while keeping their surfaces opposed to each other, and the gap between the belts is narrower at the exit side than at the entrance side.

It is preferable in the process that the PTFE powder provided with lubricity by a lubricant is compressed before it is sandwiched and rolled between the belts.

It is preferable in the process that the PTFE is rolled between the belts, and further rolled between a pair of reduction rolls, so that the sheets' surfaces will be smooth.

It is preferable in the process that the formed PTFE is heated to 30-80°C in at least one step prior to rolling or during the rolling step, so that the PTFE is easily fibrillated and the PTFE is softened and easily rolled.

It is preferable in the process that heating is conducted in at least one method selected from the group consisting of the following ones:
contacting the formed PTFE sheet with hot water;
heating by using a heating roll; and
spraying steam on the sheet. The PTFE sheet can be efficiently heated if it is previously compressed like a sheet.

It is preferable in the process that the PTFE is compressed between the surfaces of at least one pair of belts.

It is preferable in the process that at least one gap holding means selected from the group consisting of a support roll and a support plate is included inside the belts which compress the PTFE powder provided with lubricity by a lubricant, so that the PTFE can be rolled uniformly between the surfaces of at least one pair of belts.

It is preferable in the process that at least one pressing means is included inside the belts which roll the PTFE sheet, and the pressing means is selected from the group consisting of a support roll and a support plate, so that the PTFE can be uniformly rolled between the surfaces of at least one pair of belts.

It is preferable in the process that the PTFE sheet is rolled 2-6 times in the transverse direction in the rolling step, so that a wide PTFE sheet can be rolled uniformly and steadily.

It is preferable in the process that the PTFE powder provided with lubricity by a lubricant is at least one kind of powder selected from the group consisting of lubricant-containing PTFE powder and lubricant-containing PTFE wet powder. The former is prepared by coagulating and drying PTFE aqueous dispersion and adding and mixing lubricants thereto. The latter is prepared by adding lubricants during coagulation or slurrying and co-coagulating, which is disclosed in WO 95/23178.

It is preferable in the process that the PTFE powder provided with lubricity by a lubricant is granulated and kneaded in the following manner:
(a) preparing an apparatus which comprises at least one pair of strip-like water-repellent belts running while keeping their surfaces opposed to each other, a means to make the running speeds of the belts different from each other, and a means to vibrate at least one of the belts in the transverse direction; and
(b) continuously granulating and kneading the PTFE powder by sandwiching the PTFE powder provided with lubricity by a lubricant in the gap formed between the opposed surfaces of the belts, and by conveying the PTFE powder obliquely to the running direction of the belts.

It is preferable in the process that the belts are fiber-reinforced resin belts having embossed surfaces, so that granulation and kneading can be conducted efficiently due to frictional force.

It is preferable in the process that at least one gap holding means is provided inside the belts and the gap holding means is selected from the group consisting of a support roll and a support plate.

It is also preferable in the process that the average diameter of the PTFE granulated and kneaded particles ranges from 2 to 10mm.

It is preferable in the process that the granulated-kneaded particles of the lubricant-containing PTFE wet powder are formed to be a sheet after a dewatering step.

It is preferable in the process that the lubricant is at least one material selected from the group consisting of solvent naphtha, petroleum ether, and liquid paraffin.

It is preferable in the process that 5-150ml of lubricants are present in 100g of PTFE at 25°C. It is more preferable that the range is 14-75ml to 100g of PTFE at 25°C.

It is preferable in the process that the PTFE is prepared by emulsion polymerization.

As the PTFE, there are not only a polymer of tetrafluoroethylene alone but also a modified PTFE which is copolymerized with a small amount of other comonomers, so that the modified PTFE can be fused but not fluidised at or above the melting point.

In the above-mentioned process, the PTFE can contain a filler or the PTFE can be mixed with a filler.

A PTFE sheet of this invention is produced in the above-mentioned process. As this PTFE sheet is rolled in the transverse direction by belt rolling, its transverse orientation and strength can be freely controlled only by adjusting the gap at the exit side.

The PTFE sheet forming apparatus of this invention comprises a means for sandwiching and rolling PTFE powder provided with lubricity by a lubricant between at least one pair of strip-like belts that run while keeping their surfaces opposed to each other, where the gap between the belts is narrower at the exit side than at the entrance side.

It is preferable in the apparatus that a means for compressing the PTFE powder to form a sheet is provided, and that the compression is conducted before the powder is sandwiched and rolled between the surfaces of the belts.

It is preferable in the apparatus that at least one pair of reduction rolling means are provided downstream of the sandwiching and rolling means.

It is preferable in the apparatus that a means for heating the formed PTFE at 30-80°C during rolling or during at least one step before rolling is provided.

It is preferable in the apparatus that the heating means is selected from the group consisting of a means contacting the formed PTFE with hot water, a means heating the PTFE by a heating roller, and a means spraying steam on the PTFE.

It is preferable in the apparatus that the PTFE is compressed between the surfaces of at least one pair of belts.

It is preferable in the apparatus that at least one gap holding means is included inside the belts which compresses the PTFE, and the gap holding means is selected from the group consisting of a support roll and a support plate.

It is preferable in the apparatus that at least one pressing means is included inside the belts which roll the PTFE sheet, and the pressing means is selected from the group consisting of a support roll and a support plate.

It is preferable in the apparatus that the PTFE sheet is rolled 2-6 times in the transverse direction during the rolling step.

It is preferable in the apparatus that the PTFE powder provided with lubricity by a lubricant to be rolled to sheet shape is granulated and kneaded in the following steps:
(a) preparing at least one pair of strip-like water-repellent belts running while keeping their surfaces opposed to each other, a means to make the running speeds of the belts different from each other, and a means to vibrate at least one of the belts in the transverse direction;
(b) continuously granulating and kneading the PTFE powder provided with lubricity by a lubricant by sandwiching the powder in the gap formed between the opposed surfaces of the belts, and by conveying the PTFE powder provided with lubricity by a lubricant obliquely to the running direction of the belts.

It is preferable in the apparatus that the belts are fiber-reinforced resin belts having embossed surfaces.

It is preferable in the apparatus that at least one gap holding means is included inside the belts; and the gap holding means is selected from the group consisting of a support roll and a support plate.

It is preferable in the apparatus that the average diameter of the granulated-kneaded PTFE particles ranges from 2 to 10mm.

It is preferable in the apparatus that a dewatering means is provided between the granulation-kneading means and the sheet forming means when using lubricant-containing PTFE wet powder.

The granulating-kneading apparatus of this invention comprises a pair of water-repellent belts, a means to make the running speeds of the belts different from each other, and a means to vibrate at least one of the belts in the transverse direction, where the starting material is sandwiched in the gap formed between the opposed surfaces of the belts, and the material is conveyed obliquely to the running direction of the belts, so that the starting material is continuously granulated and kneaded.

It is preferable in the apparatus that the material to be granulated and kneaded is PTFE powder provided with lubricity by a lubricant.

It is preferable in the apparatus that the belts are fiber-reinforced resin belts having embossed surfaces.

It is preferable in the apparatus that at least one gap holding means is provided inside the belts and that the gap holding means is selected from the group consisting of a support roll and a support plate.

It is also preferable in the apparatus that the average diameter of the granulated-kneaded particles ranges from 2 to 10mm.

In the above-mentioned process and apparatus of this invention, a PTFE sheet can be produced continuously and efficiently. In addition, granulation and kneading can be conducted continuously and efficiently by sandwiching the material in the gap formed between the opposed surfaces of the resin belts, by making the running speeds of the belts different from each other, vibrating at least one of the belts in the transverse direction, and thus, conveying the material obliquely to the running direction of the belts. If a solid wet material such as lubricant-containing PTFE wet powder is used for the starting material, granulation and kneading can be conducted continuously and dewatering is also carried out efficiently because of the pressure of the resin belt surfaces. Furthermore, this invention provides a process and apparatus for forming a PTFE sheet, which can modify the sheet width in a simple manner without any additional operations such as dies change.

If a solid wet material such as lubricant-containing PTFE wet powder is used to be granulated and kneaded in the apparatus of this invention, the granulation-kneading process can be conducted continuously, and the material can be dewatered efficiently since it is pressed between the surfaces of the resin belts. This apparatus can be used for several kinds of solid wet materials such as sludge and polymerized wet synthetic resins.

### BRIEF DESCRIPTION OF THE DRAWINGS

FIG. 1 is a schematic view showing a process for continuously producing a PTFE sheet of one embodiment of this invention.

FIG. 2 is a schematic view showing a process for continuously producing a PTFE sheet of another embodiment of this invention.

FIG. 3 is a schematic view showing a process for continuously producing a PTFE sheet of still another embodiment of this invention.

FIG. 4 is an illustrative side view showing a granulating-kneading apparatus (a beltpress granulating-kneading apparatus) of one embodiment of this invention.

FIG. 5 is an illustrative front view showing a granulating-kneading apparatus (a beltpress granulating-kneading apparatus) of one embodiment of this invention.

FIG. 6A is an enlarged plan view of a resin belt 40 of one embodiment of this invention. FIG. 6B is a cross-sectional view along the line I - I of FIG. 6A. FIG. 6C is a cross-sectional view along the line II - II of FIG. 6A.

FIG. 7 is an illustrative view showing how the material is conveyed on the belt of a granulating-kneading apparatus (a beltpress granulating-kneading apparatus) of one embodiment of this invention.

### BEST MODE FOR CARRYING OUT THE INVENTION

In the process and apparatus of this invention, it is preferable that at least one kind of powder provided with lubricity by a lubricant is prepared. The powder is selected from the group consisting of lubricant-containing PTFE powder and lubricant-containing PTFE wet powder. The former is prepared by coagulating and drying PTFE aqueous dispersion and adding-mixing a lubricant thereto. The latter is prepared by adding a lubricant during coagulation or slurrying and co-coagulating as disclosed in WO 95/23178. The powder is formed into a sheet by using a horizontal belt press and heated to about 30-60°C. The sheet is sandwiched and rolled between a pair of strip-like belts that move while keeping their surfaces opposed to each other. The gap between the belts is narrower at the exit side compared to the entrance side. Hereinafter, the process is called 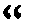 beltpress rolling". The rolled PTFE sheet is gradually compressed between the belts during the rolling.

An object which is pressed and compressed from above will be generally compressed in four directions if the surrounding condition is the same. If there are obstacles in the two directions, the object will be rolled only in the remaining two directions. The same phenomenon will occur in the PTFE sheet rolled by the belt press. The PTFE sheet is sandwiched between the belts and conveyed synchronizing with the belts in the traveling direction of the belts. In this process, the sheet prevents itself from moving forward or backward, and also the gap between the belts is narrower at the exit side than at the entrance side. So the PTFE sheet is gradually compressed from above due to the beltpress rolling, and as a result, the sheet is rolled in the direction perpendicular to the conveying direction. In other words, the sheet is rolled in the transverse direction. The PTFE powder is oriented and fibrillated in the conveying direction. The oriented-fibrillated PTFE twine with each other, and thus, the sheet will become strong and stretched. After the beltpress rolling, the PTFE is rolled by ordinary reduction rolls to be thinner if necessary. If the surfaces of the belts are rough, the surfaces of the sheet can be smoothened by such rolling. The lubricant is removed by means of drying, extraction and so on. The sheet will be sintered if necessary.

If the formed PTFE sheet is rolled by ordinary reduction rolls or horizontal belt press where the gap between the belt surfaces is kept parallel, the powder is substantially not conveyed to the direction perpendicular to the running direction. Therefore, substantially no fibrillation or orientation will occur in that direction. As a result, the sheet has little strength or stretch in the direction perpendicular to the sheet's rolling direction after drying, so such a sheet will soon be torn due to lack of strength.

Orientation and fibrillation of the PTFE are accelerated as temperature rises and there is no more acceleration of orientation and fibrillation at temperatures of 50°C or higher. Thus, the sheet is preferably heated during the beltpress rolling. It is preferable that the sheet is dipped in hot water in order to prevent the lubricant from evaporating in the heating step. Though the press rolling may consist of only one stage without a compression step, it is preferable that PTFE is rolled after it is compressed to be a sheet. It is also preferable that the sheet is heated during beltpress rolling. It is further preferable that the sheet is heated by contacting with hot water. When either powder or granulated-kneaded material is heated by contacting with hot water and belt-pressing in one stage, water deposited to the powder surface may remain inside the sheet, though most water will be removed during the compressing step. The water remaining inside the sheet will prevent linkage by fibrillation and cause poor performance. Dewatering after the heating step will lower the temperature, and thus, the heating step is of no use. On the other hand, if the PTFE is compressed to be a sheet before it is heated by contacting with hot water and belt-pressed, water will not enter inside the sheet, and thus, a sheet can be formed efficiently by beltpress rolling without any necessity of a dewatering step.

In order to prevent the material from slipping during beltpress rolling, the surfaces of the belts are preferably rough, uneven, or embossed.

The formed product is rolled by the belts in the transverse direction as it is compressed. Thus, it is predictable how much the sheet is stretched in the transverse direction by the ratio of the sheet thickness to the gap at the exit side. When the sheet is thicker than the gap at the entrance side, the degree of stretch can be predicted by the ratio of the entrance side gap to the exit side gap. On the contrary, the sheet is rolled in the longitudinal direction but substantially not in the transverse direction if an ordinary reduction roll is used. Therefore, the width of the sheet can be controlled if a guide is provided.

In the forming process of this invention, the product is less fibrillated compared to the paste-extrusion method, thus it is preferable that fibrillation is previously promoted. More specifically, it is preferable that the sheet is slightly fibrillated as if it were hand-kneaded. For this purpose, for instance, coagulating time and lubricant-mixing time will be extended, or a further improved apparatus is used for treating lubricant-containing PTFE powder or lubricant-containing PTFE wet powder. Such an apparatus has a pair of resin belts which run keeping their surfaces opposed to each other, a means to make the running speeds of the belts being different from each other, and a means to vibrate one of the belts in the transverse direction, so that the shearing can be controlled more freely.

PTFE is obtained, for instance, by emulsion polymerization or suspension polymerization of tetrafluoroethylene (TFE). Among them, powder obtained by TFE emulsion polymerization is preferably used since it is easily fibrillated.

As the PTFE, there are not only a polymer of tetrafluoroethylene alone but also a modified PTFE which is copolymerized with a small amount of other comonomers, so that the modified PTFE can be fused but not fluidized at or above the melting point.

As the comonomers, hexafluoropropene, chlorotrifluoroethylene, perfluoro(alkylvinylether), perfluoro(alkoxyvinylether), trifluoroethylene, and perfluoroalkylethylene can be used. The proportion of the comonomers varies with the kind thereof, and when perfluoro(alkylvinylether) or perfluoro(alkoxyvinylether) is used as the copolymer, it can be used, as a copolymerization component, in an amount of not more than 2% by weight, preferably, 0.01 to 1% by weight.

The PTFE can contain a filler. Such a filler can be added during coagulation and co-coagulated, or it can be mixed with the PTFE after coagulation. As the fillers, there are used, for example, carbonaceous powder, carbonaceous fiber, inorganic powder, inorganic fiber, metal or alloy powder, and organic powder or fiber. More specifical examples are:
carbonaceous powder or fiber such as carbon black, carbon fiber and graphite;
oxidizing powder such as feldspar, silica, alumina, titanium oxide and iron oxide;
inorganic powder such as silicon nitride, carbon nitride, aluminum nitride, boron nitride, zirconium carbide, silicon carbide, tungsten carbide, nickel carbide, zirconium sulfate, barium sulfate, kaolin, clay, talc, mica, glass beads and glass balloon;
inorganic fiber such as glass fiber, alumina fiber, potassium titanate fiber, and silica fiber;
metal or alloy powder such as copper alloy, zinc oxides, molybdenum disulfide, aluminum and aluminum alloy; and
organic powder or fiber such as perfluoroalkoxy resin, perfluoroethylenepropene resin, polychlorofluoroethylene resin, polyamide imide resin, polyether sulfone resin, polyetherimide resin, polysulphone resin, polyphenylene sulfide resin, polycarbonate resin, polyimide resin, polyphenylene oxide resin, oxybenzoyl polyester resin, and liquid crystal polymer. These fillers are added to enhance a mechanical property (e.g., wear resistance, compressive strength, and cold flow resistance) and an electrical property (e.g., electrostatic elimination and a conductive property) of the formed product. A desirable amount of the fillers is not more than 90% by weight, preferably not more than 60% by weight, more preferably not more than 40% by weight based on a total weight of rolled PTFE and fillers for the reason that a form of the product is maintained by the PTFE.

Any lubricant that can easily moisten the PTFE for lubricity in the formation step and easily removed after the formation step may be used.

Lubricants can be added and mixed in any one of the steps. More specifically, lubricants can be added before the formation step, for example, during coagulation, slurrying, or after the powder is coagulated and dried.

Methods disclosed in International Publication WO 95/23178 are applicable in order to co-coagulate PTFE and the lubricants. Coagulants may be used for this purpose. This is because the addition of the lubricants makes the coagulation difficult. As the coagulants, there may be used any one usually used for the coagulation of the aqueous PTFE dispersion, for instance, water soluble salts such as magnesium chlorides, aluminum chlorides and aluminum nitrate, mineral acids such as nitric acids, hydrochloric acids and sulfuric acids, water soluble organic liquids such as alcohols and acetone, and cationic surfactants. The lubricants may be added when the coagulation is started or when the aqueous dispersion is in the state of a slurry with agitation. Adding the lubricants to the dispersion that is in the form of a slurry gives an effect such that it becomes unnecessary to add the coagulants. For the coagulation, besides batch type systems, there are used continuous type systems, for instance, a high shear machine such as a pipe line mixer and a pipe line mill and a ribbon granulator, in which starting materials are conveyed and coagulated continuously. Also, besides mechanical shearing such as agitation, it is possible to coagulate by ultrasonic wave, and to use mechanical shearing together with ultrasonic wave.

This invention enables the lubricant-containing PTFE wet powder to be obtained continuously by pre-mixing the emulsified lubricants and aqueous PTFE dispersion in the specified ratio, feeding the pre-mixed lubricants and dispersion to the high shear machine continuously and adding coagulants at one point of the water which is used for sealing the sliding portion. Also the lubricant-containing PTFE wet powder may be obtained continuously without the coagulants by feeding the lubricants quantitatively to the aqueous PTFE dispersion in the form of a slurry and agitating with the high shear machine. Further the lubricant-containing PTFE wet powder containing a filler may be obtained continuously by pre-mixing the filler in the aqueous PTFE dispersion or in the sealing water or lubricants and then feeding quantitatively.

The process for continuously granulating and kneading PTFE powder provided with lubricity by a lubricant is explained below. The apparatus for this process is improved from a beltpress apparatus, by making running speeds of the pair of water-repellent belts different from each other and vibrating at least one of the belts in the transverse direction of the belts, so that the material to be granulated-kneaded is sandwiched between the belts and conveyed obliquely to the running direction of the belts.

In the above-mentioned apparatus, a pair of water-repellent belts are, for example, resin belts, cloth belts coated with resin etc., and metal belts. Among them, resin belts are preferably used. A belt is made of resin, such as polyurethane and chloroethylene, and it also contains rubber. Insides or backs of the belts are preferably reinforced with synthetic fiber fabrics such as nylon and polyester, or with glass fiber fabrics in order to maintain the strength and stabilize the size. It is preferable that the surfaces of the resin belts (the surfaces contacting with the materials to be granulated and kneaded) are embossed, so that the materials can be properly kneaded without slipping. It is preferable that the belts have 2-5 protrusions per 10mm, and the difference in height from the bottom of a concavity to the top of a protrusion ranges from 0.2 to 1.5mm. The embossing of the belt surfaces is not limited to the above-mentioned shape.

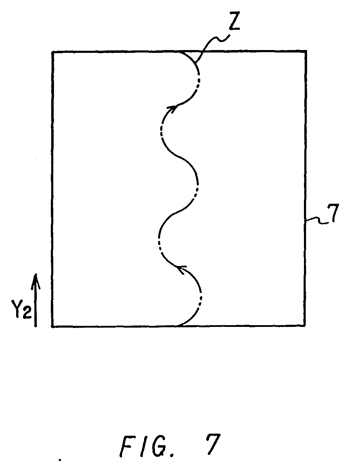

The opposed surfaces of a pair of water-repellent belts run in the identical direction to convey the materials to be granulated and kneaded. The running speeds of the water-repellent belts are made different, and at least one of the belts, for instance the upper belt, is vibrated in the transverse direction. As a result, the materials are sandwiched in the gap between the opposed surfaces of the belts and conveyed in the belts' running direction, curving like sine codes. The preferable curving cycles for the belts to run are about 2 to 10. This movement will be explained later referring to FIG. 7. The materials to be granulated and kneaded are sheared in the running direction and in the perpendicular direction, and thus, they are continuously granulated and kneaded because of the difference in speed of the belts and because of the belt's vibration in the transverse direction.

In the process and apparatus of this invention, granulation and kneading can be conducted efficiently and continuously by sandwiching the materials to be granulated and kneaded in the gap between the opposed surfaces of a pair of belts made of a water-repellent material, making the running speeds of the belts different, vibrating at least one belt in the transverse direction, and conveying the materials obliquely to the belts' running direction. If a wet solid such as lubricant-containing PTFE wet powder is used for the starting material, granulation and kneading are conducted continuously, and the materials can be dewatered efficiently as the materials are pressed between the surfaces of the belts made of a water-repellent material.

The process and apparatus of this invention are especially useful for the steps where PTFE wet powder provided with lubricity by a lubricant is granulated, kneaded and preformed to be a sheet, and rolled between belts.

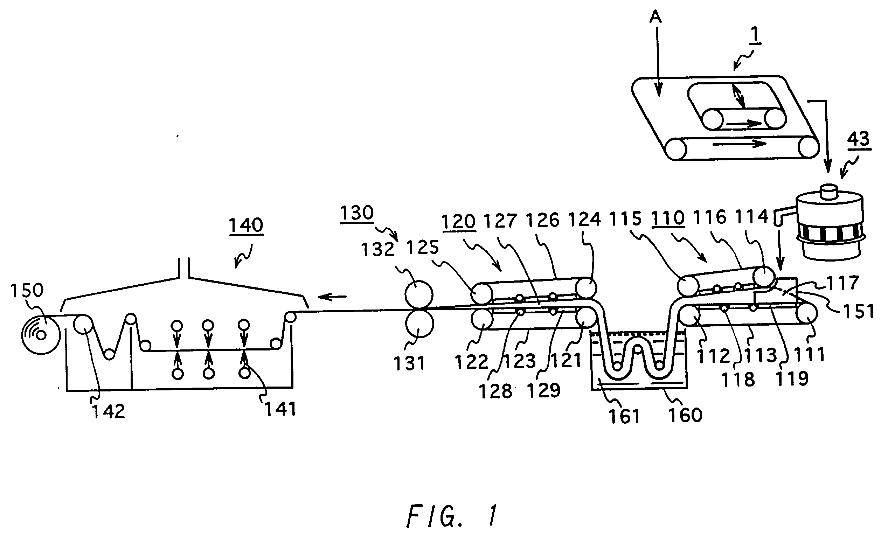

This invention will be explained in more detail referring to FIGs. 1-6.

FIG. 1 is a schematic view to show the process for continuously producing a PTFE sheet of one embodiment in which lubricant-containing PTFE wet powder is used. In FIG. 1, an aqueous PTFE dispersion prepared by emulsion polymerization and a lubricant are co-coagulated, and the lubricant-containing PTFE wet powder is fed from the feeding line A after pre-dewatering. The PTFE aqueous dispersion contains 10 to 30% of PTFE particles by weight, and the average diameter of the PTFE particles is from 0.2 to 0.4 µm. The lubricant, which is selected from the group consisting of solvent naphtha, petroleum ether, and liquid paraffin etc., has a surface tension of at most 40dyn/cm, preferably, at most 30dyn/cm, at 25°C.

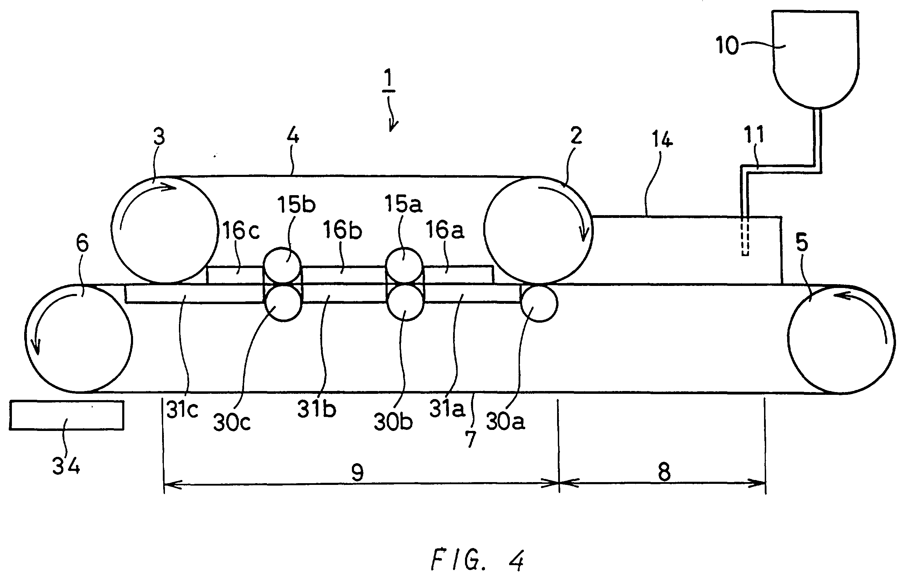

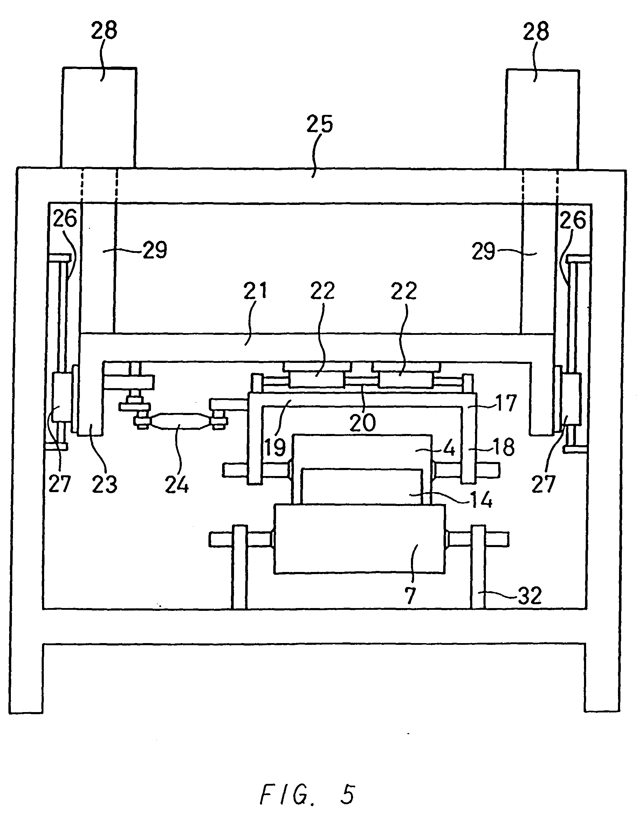

The lubricant-containing PTFE wet powder is conveyed obliquely to the belts' running direction of a granulating-kneading apparatus 1 for granulating-kneading and for internal dewatering by pressing and rubbing. FIGs. 4 and 5 are the drawings to show the details of the granulating-kneading apparatus 1.

The granulated and kneaded lubricant-containing PTFE material has the water on its surface removed by the vibration dewatering apparatus 43. Next, the dewatered lubricant-containing PTFE material 117 is controlled by a width guide 151 to have a predetermined width, and fed to the compression step 110. The apparatus used in the compression step 110 has a horizontal belt 113 wound on rolls (111, 112) and a compressing belt 116 wound on rolls (114, 115). In the apparatus, the opening at the roll 114 side can be wider than the opening at the roll 115 side. The granulated-kneaded lubricant-containing PTFE wet powder particles are fed on the horizontal belt 113 at the roll 111 side, compressed in the running direction, and formed to be a compressed sheet by passing through the belts at the other side provided with the rolls (112, 115). It is preferable that at least one gap holding means is provided inside of the belts (113, 116), and the means is selected from the group consisting of a support roll 118 and a support plate 119. A PTFE sheet is provided in this manner. This sheet is introduced to a hot water tank 160 where it is heated to 30-80°C, preferably to about 40-60°C in hot water 161.

In the following belt rolling step 120, an apparatus having a horizontal belt 123 wound on the opposite rolls (121, 122) and a compressing belt 126 wound on opposite rolls (124, 125) are used. The opening at the rolls (121, 124) side is wider than that of the rolls (122, 125) side. The above-mentioned compressed sheet is produced in the belt rolling step 120. The sheet provided by this belt rolling step 120 has sufficient thickness and strength for a practical use. It is preferable that at least one pressing means is provided inside the belts (123, 126), and the pressing means is selected from the group consisting of a support roll 128 and a support plate 129.

The horizontal belt 123 and the compressing belt 126 run in the longitudinal direction at the uniform velocity in the belt rolling step. The belts do not vibrate transversely in the running direction unlike the belts of the granulating-kneading apparatus. The opening of the horizontal belt 123 and the compressing belt 126 is wider at the feeding side than at the discharge side. The compressive belt 126 is preferably set with an angle between the feeding side and the discharge side, and the opening of the feeding side is wide while the discharge side is narrow.

A roll reduction step 130 can be added to further smoothen the PTFE sheet surface. For example, a pair of reduction rolls (131, 132) are used for this roll reduction step 130. At this time, the reduction rolls (131, 132) are preferably heated to about 40-60°C.

The rolled sheet is fed to a dryer 140 to remove the lubricant. In the dryer 140, the lubricant is removed by, for instance, using 120°C high-pressure steam 141. Next, the sheet is passed through a roll 142 heated to 260°C to completely remove the contained water and lubricant, and wound on a winder 150. Instead of the roll 142, multistage heated rolls can be used to raise the temperature gradually.

The dryer 140 can be replaced by another dryer having a heating means. Or, such a dryer can be serially connected next to the dryer 140. As another method for removing the lubricants, extraction by using solvents can be taken. Extraction will be conducted by dipping the sheet for one to three minutes in a solvent such as trichloroethane, trichloroethylene, tetrachloroethylene, alcohol, acetone or water. The thus formed PTFE sheet may be wound on the winder 150 in the unsintered state or may be sintered if necessary. The formed sheet can be heated at 340-400°C or more preferably, at 360-380°C if it needs to be further sintered.

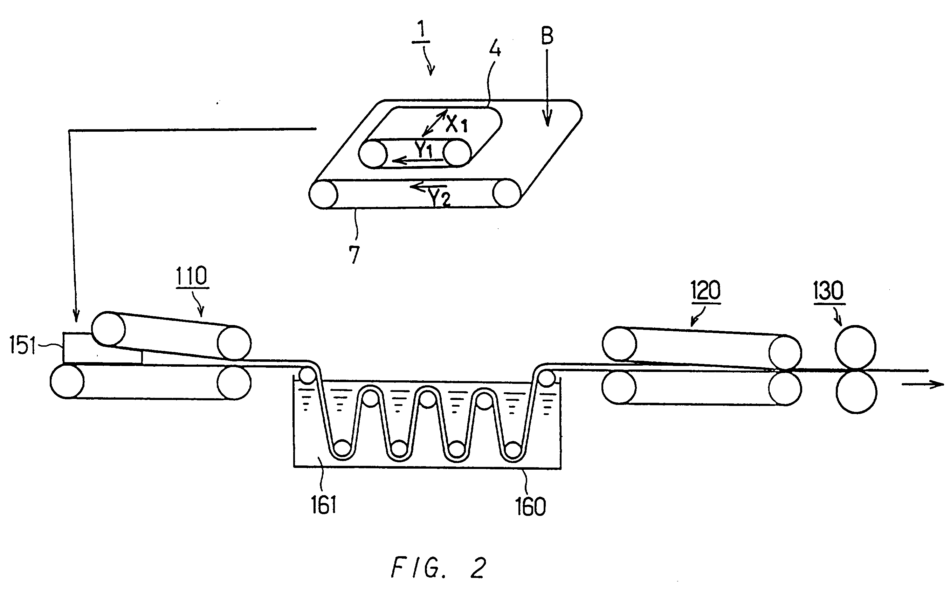

FIG. 2 is a flow chart of another embodiment suitable for the use of lubricant-containing PTFE powder. The lubricant-containing PTFE powder, which is fed from the feeding line B, is previously prepared by adding lubricants to PTFE dry powder and mixing the lubricants with the PTFE dry powder.

The fed lubricant-containing PTFE powder is directly sent to the granulating-kneading zone 9 (FIG. 4) by using a lower resin belt 7. In this granulating-kneading zone 9, the lubricant-containing PTFE powder is sandwiched between the upper resin belt 4 and the lower resin belt 7. The running speeds of the upper resin belts 4 and the lower resin belt 7 are different from each other (arrows Y₁ and Y₂ in FIG. 2), and the upper resin belt 4 vibrates in the transverse direction (arrow X₁ in FIG. 2), so that the powder is granulated and kneaded due to pressure while it is sheared. At this time, it is preferable that the upper resin belt 4 runs faster than the lower resin belt 7, so that the running speed increases when the powder enters the granulating-kneading zone 9, and that fine granulated-kneaded particles can be obtained.

At this time, the lubricant-containing PTFE powder is granulated and kneaded by pressure and shear, while the powder is conveyed in the gap between the upper resin belt 4 and the lower resin belt 7, successively changing the surfaces of the powder contacting the resin belts. The average particle diameter of the lubricant-containing PTFE powder is about 500 µm to 1mm before granulation and kneading, and after these steps, the average diameter is about 2-6mm.

The granulated-kneaded PTFE powder is fed to the compression step 110 as in FIG. 1, controlled to have a predetermined width by using the width guide 151, and formed into a sheet as shown in FIG. 1.

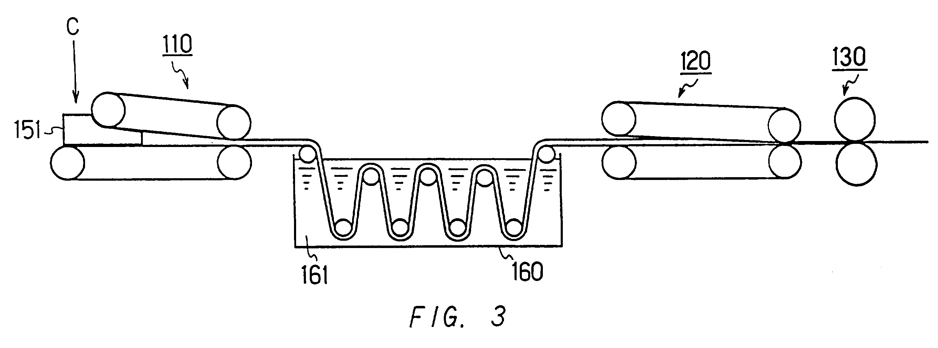

FIG. 3 is a flow chart to show another embodiment of this invention suitable for using lubricant-containing PTFE powder. The PTFE dry powder to which a lubricant is added and mixed is fed from the feeding line C. This embodiment is different from the embodiment of FIG. 2 in that the powder is fed directly to the compression step 110 shown in FIG. 1 without being granulated or kneaded. The PTFE powder is formed into a sheet in the same manner shown in FIG. 1.

FIG. 4 is an explanatory side view to show a granulating-kneading apparatus, hereinafter, a beltpress granulating-kneading apparatus, of one embodiment of this invention. FIG. 5 is an explanatory front view of the beltpress granulating-kneading apparatus of one embodiment of this invention.

This apparatus 1 comprises an endless upper resin belt 4 (a fiber-reinforced polyurethane resin belt) wound on the rolls (2, 3) and an endless lower resin belt 7 (a fiber-reinforced polyurethane resin belt) wound on the rolls (5, 6), and the upper resin belt 4 and the lower resin belt 7 run while keeping their surfaces opposed to each other.

The starting materials to be granulated and kneaded are fed to a starting material feeding zone 8 on the lower resin belt 7 from a reservoir tank 10 through a feeding section 11, and sent to a granulating-kneading zone 9 by the lower resin belt 7. An enclosure 14 is provided at both sides of the lower resin belt 7 in the starting material feeding zone 8, so that the material will not drop from the both sides of the feeding portion.

The upper resin belt 4 is wound on the rolls (2, 3). Inside the upper resin belt 4 and between the rolls (2, 3) are provided the support rolls (15a, 15b) and the support plates (16a, 16b, and 16c). The rolls (2, 3), support rolls (15a, 15b) and the support plates (16a, 16b, and 16c) are all supported with the arm 18 of the lower support 17 as shown in FIG. 5. The lower support 17 comprises the upper member 19 and the arms 18 extending downward at the ends of the upper member. On the upper member 19 is mounted a rail 20 in the crosswise direction (at a right angle to the running direction of the resin belt). Over the lower support 17 is placed an upper support 21, and the lower support 17 is supported with the upper support 21 so as to be movable in the transverse direction by passing the above-mentioned rail 20 through the support members 22 mounted on the upper support 21. At one side (left side in FIG. 5) of the lower support 17 and between the portion 23 extending downward from the upper support 21 and the lower support 17, there is provided a vibrating device 24, which connects them. The vibrating device 24 is driven by a driving unit (not shown). The lower support 17 is vibrated in the transverse direction by driving the vibrating device 24 while the vibrating device 24 is suspended by the support members 22 of the upper support 21 through the rail 20.

Also around the upper support 21 is provided a frame 25, and at the sides inside the frame 25, rails 26 extending vertically are provided. Outside the downward extending portions 23 of the upper support 21 are provided support members 27, and the upper support 21 is supported at the sides of the frame 25 so as to be movable vertically by passing the rails 26 through the support members 27. On the top of the frame 25 are disposed air cylinders 28, which are connected integrally with the upper support 21 by means of support bars 29. The air cylinders 28 transmit a force to the lower support 17 through support bars 29, upper support 21, support members 22 and rail 20, and the force is further conveyed to the rolls (2, 3), support rolls (15a, 15b) and support plates (16a, 16b, 16c) which are arranged inside the upper resin belt 4 through the respective shafts, thus, as a result, flexibly pressing the upper resin belt 4 downward.

The lower resin belt 7 is wound on the rolls (5, 6), and the support rolls (30a, 30b, and 30c) and the support plates (31a, 31b, and 31c) are disposed between the rolls (5, 6) inside the lower resin belt 7. The rolls (5, 6), support rolls (30a, 30b, and 30c) and support plates (31a, 31b, and 31c) are all supported by one support legs 32 installed at the lower part of the frame 25 as shown in FIG. 5.

The starting materials to be granulated and kneaded are sandwiched in a gap between opposed surfaces of the upper resin belt 4 and the lower resin belt 7 in order to be granulated and kneaded by pressing and rubbing. If the materials contain water, dewatering is also conducted. At the time of pressing, sagging of the upper resin belt 4 and the lower resin belt 7 tends to occur between each roll. To prevent it, there are provided the support rolls (15a, 15b, 30a, 30b, and 30c) and the support plates (16a, 16b, 16c, 31a, 31b, 31c).

The upper resin belt 4 and the lower resin belt 7 are so designed that the running speeds of the belts can be made different by changing the rotation speeds of the rolls (2, 3) and (5, 6), which are driven by a driving unit not shown in the figure. The rolls may be driven by the respective driving units or one driving unit through a transmission.

The upper resin belt 4 is 1785mm long, 300mm wide, and the lower resin belt 7 is 3235mm long, 400mm wide. The surfaces of these belts are made of polyurethane resin, and the backsides are reinforced with nylon fabric. The surfaces which contact with the materials to be granulated and kneaded are embossed.

The granulated and kneaded materials (e.g., solid wet materials) are dropped into a receiving pan 34 disposed under the roll 6. The materials will drop by their own weight, and may be dropped by using a scraper or the like, if necessary.

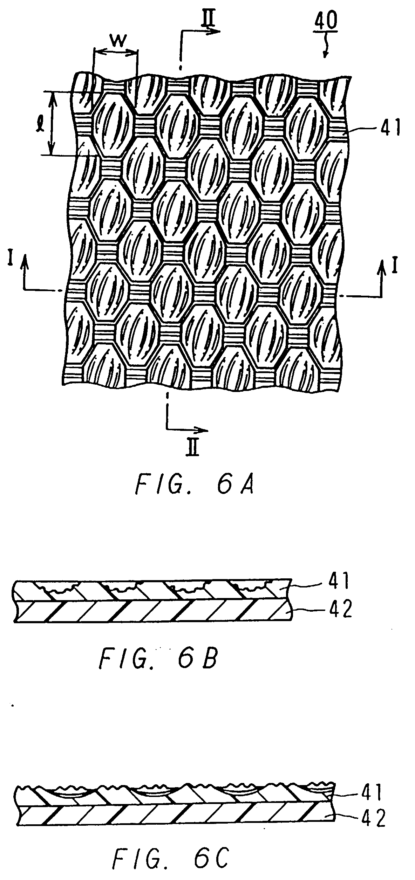

FIGs. 6A-6C show an embossed resin belt of one embodiment. FIG. 6A is an enlarged plan view of a resin belt 40, FIG. 6B is a cross-sectional view of FIG. 6A along the line I - I , and FIG. 6C is another cross-sectional view of FIG. 6A along the line II - II. The resin belt 40 comprises a resin layer 41 of urethane resin or chloroethylene resin etc., and a fiber-fabric layer 42. The resin layer 41 is impregnated or adhered to the fiber-fabric layer 42. The thickest part of the resin layer 41 is about 1mm thick, and the fiber-fabric layer 42 is about 1.2mm thick. The honeycomb shape concavities of the embossed surface are shown in FIG. 6A. In FIG. 6A, w is about 2mm, *l* is about 3mm. The deepest part is about 0.5mm. Needless to say, the embossed shape is not limited to this example.

In order to convey the materials to be granulated and kneaded, the resin belts (4, 7) run in the same direction at different speeds. The preferable speed difference is about 1-2m/min. (the upper belt is faster than the lower belt) when the lower belt runs at 2m/min. Namely in such a case, the upper belt runs at 2-3m/min. In addition, at least one of the belts, e.g. the upper belt, is vibrated in the transverse direction. The preferable vibration frequency is 10-30 cycles/min., more preferably, about 20 cycles/min. The vibration length is about 10-100mm (from end to end of one cycle), more preferably, about 50mm. As a result, the starting materials to be granulated and kneaded are sandwiched in the gap between the opposed surfaces of the belts, and the materials are conveyed zigzag obliquely with respect to the running direction of the belts. The movement of the materials is shown in FIG. 7 from which the upper resin belt 4 is omitted for explanation. Line z in FIG. 7 indicates how the materials to be granulated and kneaded are conveyed on the lower resin belt 7. The materials move along a sine curve since the upper belt 4 is vibrated in the transverse direction while the lower resin belt 7 runs in the Y₂ direction. The preferable cycle for the movement is about 2-10, more preferably, about 3-5. Due to the running speed difference between the two belts and the vibration provided to at least one of the belts, the materials to be granulated and kneaded are sheared in the running direction and in the perpendicular direction, and thus, granulated and kneaded.

Due to the running speed difference between the upper resin belt 4 and the lower resin belt 7 and the vibration provided transversely by a vibration device 24 to the upper resin belt 4, the materials are conveyed along a sine curve between the two belts, and thus, granulated and kneaded.

The following effects can be obtained by using the belt press granulating-kneading apparatus of the embodiment of this invention.
1) The material can be kneaded as if it were kneaded by hand.
2) The material can be kneaded uniformly because the whole material is pressed uniformly.
3) The material can be continuously treated.
4) Excellent granulation can be obtained.
5) A dewatering function is also obtained.

The details of this invention are explained below referring to the Examples.

### Example 1

Hydrocarbon oil as a lubricant (IP 2028 by IDEMITSU Oil Co. Ltd.) was added to and mixed with the PTFE dry powder (fine powder F-104 by DAIKIN INDUSTRIES Ltd.) in an amount corresponding to 25 parts by weight based on 100 parts by weight of the PTFE particles by using a rocking mixer (produced by AICHI Electric Co. Ltd.) using the apparatus shown in FIG. 3. Then the mixture was compressed into a sheet by using the compressing device shown in FIG. 3, heated for three minutes in hot water at 60°C, and rolled by using the beltpress rolling device.

The mixture was rolled by using an ordinary reduction roll heated to 50°C to a thickness of 100 µm, and heated to remove the lubricants.

The specific condition is as follows:
1) Belt compression step
   Speed of belt : 3.0m/min (both upper and lower belts)
   Width of guide : 80mm
   Sheet thickness after compression step : 5mm
   Sheet width after compression step : 100mm
   Effective length of belt : 500mm
2) Belt rolling step
   Speed of belt : 3.0m/min (both upper and lower belts)
   Sheet thickness after rolling step : 1.25mm
   Sheet width after rolling step : 400mm
   Effective length of belt : 1000mm
   Distance between belts at the entrance : 5.5mm
   Distance between belts at the exit : 1.25mm
3) Reduction rolling step
   Sheet thickness after reduction rolling step : 100 µm
   Sheet width after reduction rolling step : 400mm
   Roll temperature : 50°C

The obtained sheets had smooth surfaces. The specific gravity, the tensile strength and stretch in the longitudinal and transverse directions were measured according to the method regulated in JIS (Japanese Industrial Standard)-K6885. The result is indicated Table 1 with the results of the other Examples.

### Example 2

The PTFE and the lubricant were mixed in the same manner as Example 1, granulated and kneaded by using the granulating-kneading apparatus shown in FIG. 2, and thus, a rolled sheet was obtained in the same manner as Example 1. The result is indicated in Table 1 with the other results.
1) Granulating-kneading step
   Speed of upper belt : 3.9m/min
   Speed of lower belt : 2.1m/min
   Amplitude of upper belt : 18 times/min
   Effective length of belt : 500mm

### Example 3

Another lubricant-containing PTFE wet powder disclosed in WO 95/23178 was used as the starting material for the PTFE's coagulation. The ratio was 25 parts by weight to the PTFE 100 parts by weight. Though the apparatus was identical to that of FIG. 1, the other conditions were the same as in Example 2. The result is shown in Table 1.

### Example 4

A rolled sheet was obtained in the same manner as Example 3, except that talc (25 parts by weight) was added as a filler to the PTFE (100 parts by weight) during coagulation. The result is shown in Table 1.

### Comparative Example 1

A rolled sheet was obtained in the same manner as Example 1 except that horizontal belts were used and that only a pair of ordinary reduction rolls were used without conducting beltpress rolling for producing the sheet. The result is shown in Table 1.

**Table 1**

| Longitudinal direction | Ex. 1 | Ex. 2 | Ex. 3 | Ex. 4 | Com.Ex.1 |
|---|---|---|---|---|---|
| Tensile strength(kgf/mm²) | 1.00 | 1.00 | 1.00 | 0.80 | 1.00 |
| Stretch(%) | 130 | 130 | 130 | 100 | 130 |

| Transverse direction | | | | | |
|---|---|---|---|---|---|
| Tensile strength(kgf/mm²) | 0.10 | 0.15 | 0.15 | 0.12 | unmeasurable |
| Stretch(%) | 800 | 800 | 800 | 500 | 0 |
| Apparent density(g/ml) | 1.6 | 1.6 | 1.6 | 1.6 | 1.6 |
| Surface condition | smooth | smooth | smooth | smooth | smooth |

### Example 5

Example 5 is explained referring to FIGs. 1 and 4. FIG. 1 shows the steps where a tape is produced by granulating and kneading lubricant-containing PTFE wet powder as the starting materials. A lubricant is added to the PTFE dispersion prepared by emulsion-polymerization and coagulated. The obtained lubricant-containing PTFE wet powder is fed from the feeding line A.

The fed lubricant-containing PTFE wet powder is conveyed to the granulating-kneading zone 9 (FIG. 4) by means of the lower resin belt 7. In the granulating-kneading zone 9, the lubricant-containing PTFE wet powder is sandwiched between the upper resin belt 4 and the lower resin belt 7, granulated and kneaded due to the pressure, receiving a shear by making running speeds of the belts different from each other and vibrating the upper resin belt 4 in the transverse direction thereof.

In this case, the lubricant-containing PTFE wet powder was granulated and kneaded by pressure and shear between the upper resin belt 4 and the lower resin belt 7 with the surfaces of the belts contacting the powder being changed successively. The powder is also dewatered during this step. In general, the water removal efficiency of the treating article differs between the surface contacting the resin belts and the inside of the article. It is natural that the inside of the article is rather difficult to be dewatered. During granulation-kneading step, the inside of the article is difficult to dewater. This is the same as in the lubricant-containing PTFE wet powder. In order to decrease the water content inside the lubricant-containing PTFE wet powder as much as possible, it is effective to make the running speeds of the upper and lower resin belts different from each other by running the upper resin belt 4 faster or slower than the lower resin belt 7 and vibrate the upper resin belt 4 in the transverse direction to the running direction of the belts, thus applying a shear to the lubricant-containing PTFE wet powder and successively changing the surfaces of the powder contacting the resin belts, and thereby the water removal efficiency is improved. The average particle diameter of the untreated lubricant-containing PTFE wet powder was about 500 µm to 2mm. The diameter was about 2-6mm after granulating and kneading.

The direction and amount of the shear to be applied to the lubricant-containing PTFE wet powder can also be optionally adjusted by changing the running speed of each endless resin belt and changing the speed and amplitude of the vibration in the transverse direction of the belts.

The granulated-kneaded PTFE particles were dewatered by the vibration dewatering means 43, fed to the compression step 110 where they are formed into a sheet as in Example 1.

In the producing process and apparatus of this invention as mentioned above, PTFE sheets can be produced continuously and efficiently. In addition, it is possible to granulate and knead continuously and efficiently by sandwiching the material to be granulated and kneaded in the gap between the opposed surfaces of a pair of resin belts and conveying the material to be granulated and kneaded obliquely to the running direction of the belts by means of speeds difference of the belts and the transverse vibration applied to at least one of the belts.

In the granulating-kneading apparatus of this invention, solid wet materials such as lubricant-containing PTFE wet powder used for the starting material can be granulated and kneaded continuously, and also, can be dewatered efficiently because of the pressure applied between the surfaces of the resin belts.

## Claims

1. A process for forming polytetrafluoroethylene sheets comprising sandwiching and rolling polytetrafluoroethylene powder provided with lubricity by a lubricant in the gap between at least one pair of strip-like belts which run while keeping their surfaces opposed to each other, where the gap between the belts is narrower at the exit side than at the entrance side.

2. The process for forming polytetrafluoroethylene sheets according to claim 1, wherein polytetrafluoroethylene powder is compressed to be a sheet before being rolled between the opposed surfaces of the belts.

3. The process for forming polytetrafluoroethylene sheets according to claim 1, wherein the sheet is further rolled between at least one pair of reduction rolls after being sandwiched and rolled between the belts.

4. The process for forming polytetrafluoroethylene sheets according to claim 1, wherein the polytetrafluoroethylene powder or polytetrafluoroethylene sheet provided with lubricity by a lubricant is heated to 30-80°C in at least one step prior to rolling or during the rolling step.

5. The process for forming polytetrafluoroethylene sheets according to claim 4, wherein the heating carried by at least one selected from the group consisting of contacting hot water with the polytetrafluoroethylene, heating by using a heating roll, and spraying steam on the polytetrafluoroethylene powder or polytetrafluoroethylene sheet provided with lubricity by a lubricant when it has been formed into a sheet.

6. The process for forming polytetrafluoroethylene sheets according to claim 2, wherein the polytetrafluoroethylene powder is compressed between opposed surfaces of at least one pair of belts.

7. The process for forming polytetrafluoroethylene sheets according to claim 6, wherein at least one gap holding means selected from the group consisting of a support roll and a support plate is provided inside of the belts which compress the polytetrafluoroethylene powder.

8. The process for forming polytetrafluoroethylene poeder according to claim 1, wherein at least one pressing means selected from the group consisting of a support roll and a support plate is provided inside the belts which roll the polytetrafluoroethylene sheet provided with lubricity by a lubricant.

9. The process for forming polytetrafluoroethylene sheets according to claim 1, wherein the polytetrafluoroethylene sheet is rolled from 2 to 6 times in the transverse direction.

10. The process for forming polytetrafluoroethylene sheets according to claim 1, wherein the polytetrafluoroethylene powder provided with lubricity by a lubricant is at least one kind of powder selected from the group consisting of:
lubricant-containing polytetrafluoroethylene powder prepared by adding and mixing a lubricant to dry powder; and
lubricant-containing polytetrafluoroethylene wet powder prepared by adding and mixing a lubricant to the powder during coagulation or to the slurry and by co-coagulating.

11. The process for forming polytetrafluoroethylene sheets according to claim 1, wherein polytetrafluoroethylene provided with lubricity by a lubricant is treated and formed, and the process comprises the following steps:
(a) preparing an apparatus comprising at least one pair of water-repellent strip-like belts running while keeping their surfaces opposed to each other, a means to make the running speeds of the belts different from each other, and a means to vibrate at least one of the water-repellent belts in the transverse direction;
(b) continuously granulating and kneading the polytetrafluoroethylene powder by sandwiching the polytetrafluoroethylene powder provided with lubricity by a lubricant in a gap formed between the opposed surfaces of the belts, and by conveying said polytetrafluoroethylene powder obliquely to the running direction of the belts.

12. The process for forming polytetrafluoroethylene sheets according to claim 11, wherein the belts are fiber-reinforced resin belts having embossed surfaces.

13. The process for forming polytetrafluoroethylene sheets according to claim 11, wherein at least one gap holding means selected from the group consisting of a support roll and a support plate is provided inside the belts.

14. The process for forming polytetrafluoroethylene sheets according to claim 11, wherein the average diameter of the granulated-kneaded polytetrafluoroethylene particles ranges from 2 to 10mm.

15. The process for forming polytetrafluoroethylene sheets according to claim 1, wherein granulated-kneaded particles of polytetrafluoroethylene wet powder are formed into a sheet after dewatering.

16. The process for forming polytetrafluoroethylene sheets according to claim 1, wherein the lubricant is at least one material selected from the group consisting of solvent naphtha, petroleum ether, and liquid paraffin.

17. The process for forming polytetrafluoroethylene sheets according to claim 1, wherein 5-150ml of lubricant added per 100g of polytetrafluoroethylene at 25°C.

18. The process for forming polytetrafluoroethylene sheets according to claim 1, wherein the polytetrafluoroethylene is obtained by emulsion polymerization.

19. The process for forming polytetrafluoroethylene sheets according to claim 1, wherein the polytetrafluoroethylene is modified polytetrafluoroethylene.

20. The process for forming polytetrafluoroethylene sheets according to claim 1, wherein the polytetrafluoroethylene either contains a filler or the polytetrafluoroethylene is mixed with a filler.

21. A polytetrafluoroethylene sheet formed by the process according to claim 1.

22. An apparatus for forming polytetrafluoroethylene sheets, comprising a pair of belts which run while keeping their opposed surfaces in order to sandwich and roll polytetrafluoroethylene powder provided with lubricity by a lubricant, and the gap at the exit side of the belts is narrower than that of the entrance side to which the polytetrafluoroethylene powder is fed.

23. The apparatus for forming a polytetrafluoroethylene sheet according to claim 22, further comprising means for compressing into a sheet before being rolled between the opposed surfaces of the belts.

24. The apparatus for forming polytetrafluoroethylene sheets according to claim 22, comprising a reduction roll that is provided after the pair of belts.

25. The apparatus for forming polytetrafluoroethylene sheets according to claim 22, comprising a means for heating the polytetrafluoroethylene provided with lubricity by a lubricant in the state selected from the group consisting of powder and sheets to a temperature ranging from 30 to 80°C in at least one step prior to or during rolling between the opposed surfaces of the belts.

26. The apparatus for forming polytetrafluoroethylene sheets according to claim 25, wherein the heating means is at least one selected from the group consisting of a means contacting hot water with the polytetrafluoroethylene powder or sheet provided with lubricity by a lubricant, a heating roll, and a means for spraying steam on the polytetrafluoroethylene powder or sheet provided with lubricity by a lubricant.

27. The apparatus for forming polytetrafluoroethylene sheets according to claim 22, wherein the sheet is compressed between the opposed surfaces of at least one pair of belts.

28. The apparatus for forming polytetrafluoroethylene sheets according to claim 27, wherein at least one gap holding means is provided inside the belts which compress the polytetrafluoroethylene powder provided with lubricity by a lubricant, and the gap holding means is selected from the group consisting of a support roll and a support plate.

29. The apparatus for forming polytetrafluoroethylene sheets according to claim 22, wherein at least one pressing means is provided inside the belts to roll the polytetrafluoroethylene powder provided with lubricity by a lubricant, and the pressing means is selected from the group consisting of a support roll and a support plate.

30. The apparatus for forming polytetrafluoroethylene sheets according to claim 22, wherein the polytetrafluoroethylene sheet provided with lubricity by a lubricant is rolled from 2 to 6 times in the transverse direction during the rolling step.

31. The apparatus for forming a polytetrafluoroethylene sheet according to claim 22, wherein polytetrafluoroethylene to be rolled to a sheet is granulated and kneaded in the following steps:
(a) preparing an apparatus comprising a pair of water-repellent strip-like belts that run with their surfaces opposed to each other, a means to make the running speed of the belts different from each other, and a means to vibrate at least one of the water-repellent belts in the transverse direction;
(b) continuously granulating and kneading a polytetrafluoroethylene powder provided with lubricity by a lubricant by sandwiching the polytetrafluoroethylene in the gap formed between the opposed surfaces of the belts, and by conveying said polytetrafluoroethylene obliquely to the running direction of the belts.

32. The apparatus for forming polytetrafluoroethylene sheets according to claim 31, wherein the belts are fiber-reinforced resin belts having embossed surfaces.

33. The apparatus for forming polytetrafluoroethylene sheets according to claim 31, wherein at least one gap holding means selected from the group consisting of a support roll and a support plate is provided inside the belts.

34. The apparatus for forming polytetrafluoroethylene sheets according to claim 31, which provides granulated-kneaded polytetrafluoroethylene particles whose average diameter ranges from 2 to 10mm.

35. The apparatus for forming polytetrafluoroethylene sheets according to claim 22, wherein a dewatering means is provided to between the means for granulating-kneading the lubricant-containing polytetrafluoroethylene wet powder and the sheet-forming means.

36. An apparatus for continuously granulating and kneading the starting material by sandwiching the material in the gap formed between the opposed surfaces of a pair of belts and by conveying the material obliquely to the running direction of the belts, wherein the belts are water-repellent belts and provided with a means to make the running speeds of the belts being different from each other and a means to vibrate at least one of the belts in the transverse direction.

37. The apparatus for granulating and kneading according to claim 36, wherein the material is polytetrafluoroethylene provided with lubricity by a lubricant.

38. The apparatus for granulating and kneading according to claim 36, wherein the belts are fiber-reinforced resin belts having embossed surfaces.

39. The apparatus for granulating and kneading according to claim 36, wherein at least one gap holding means selected from the group consisting of a support roll and a support plate is provided inside the belts.

40. The apparatus for granulating and kneading according to claim 36, wherein the average diameter of the granulated-kneaded particles ranges from 2 to 10mm.
